# FASCICULE DE BREVET EUROPEEN

(11) **EP 1 121 669 B1**
(45) Date de publication et mention de la délivrance du brevet: **24.07.2002**
(21) Numéro de dépôt: 99947534.6
(22) Date de dépôt: 11.10.1999
(51) Int. Cl.: G07F 7/08, G07F 7/10

(54) **DISPOSITIF D'ACQUISITION ET DE TRANSFERT D'INFORMATIONS RELATIVES A DES MOYENS DE PAIEMENT VERS UN ORGANISME BANCAIRE**
VORRICHTUNG ZUM ERFASSEN UND ÜBERTRAGEN VON ZAHLUNGSDATEN NACH EINEM GELDINSTITUT
DEVICE FOR ACQUIRING AND TRANSFERRING DATA CONCERNING PAYMENT MEANS TO A BANKING INSTITUTION

(30) Priorité: 13.10.1998 FR 9812826
(43) Date de publication de la demande: 08.08.2001
(73) Titulaire: FRANCE TELECOM, 75015 Paris (FR)
(72) Inventeur: MILLION-ROUSSEAU, Bruno, F-69450 Saint Cyr au Mont d'Or (FR); JUNKER, Christian, F-95170 Deuil la Barre (FR)
(74) Mandataire: Habasque, Etienne Joel Jean-François
(86) Numéro de dépôt international: FR9902440
(87) Numéro de publication internationale: WO0022582

(56) Documents cités:
- EP-A- 0 382 544
- EP-A- 0 794 651
- EP-A- 0 843 290
- WO-A-90/14729
- WO-A-97/46986
- WO-A-98/17045
- WO-A-98/34203
- FR-A- 2 757 005

## Description

La présente invention est relative à un dispositif d'acquisition et de transfert d'informations relatives à des moyens de paiement vers un organisme bancaire.

Classiquement, de tels dispositifs comportent des moyens de lecture des moyens de paiement raccordés à une unité centrale de traitement, et des moyens de composition de numéros téléphoniques associés à un modem pour l'établissement d'une liaison téléphonique avec le centre serveur.

Un exemple de dispositif de ce type est constitué par les terminaux de paiements électroniques.

Ces terminaux, placés chez un commerçant, permettent d'effectuer les transactions par carte bancaire, avec sécurisation.

Ils comportent un socle fixe muni de moyens de raccordement à une ligne téléphonique et un terminal proprement dit équipé d'un lecteur de carte et d'un clavier permettant d'entrer le montant de transaction à effectuer et permettant au porteur de la carte de s'identifier.

Les terminaux de paiement électronique nécessitent l'établissement d'une liaison téléphonique avec le centre serveur d'un organisme bancaire, d'une part, pour l'obtention d'un numéro d'autorisation pour des transactions portant sur des sommes supérieures à une valeur de seuil prédéterminée, fixée à ce jour à F. 600 et, d'autre part, pour porter périodiquement au crédit du compte bancaire du commerçant les sommes correspondant aux transactions effectuées.

Dans certaines circonstances, par example lorsque le commerçant est itinérant, ou lorsqu'il dispose d'un stand sur un salon, c'est-à-dire dans des situations dans lesquelles le commerçant n'a pas de prise téléphonique à sa disposition, il n'est pas possible d'obtenir, à l'aide du terminal de paiement électronique, un numéro d'autorisation préalable et de porter au crédit de son compte les encaissements effectués.

Un commerçant peut également être confronté à ce même problème lorsqu'il souhaite utiliser un dispositif de lecture et de vérification de chèques qui nécessite également l'établissement d'une liaison téléphonique avec un organisme bancaire.

On pourra également se reporter au document WO-A-9520195 qui décrit un dispositif conforme au préambule de la revendication 1 mais qui pose des problèmes de fiabilité de la transmission.

Le but de l'invention est de pallier ces inconvénients.

L'invention telle que définie dans la revendication 1 a donc pour objet un dispositif d'acquisition d'informations relatives à des moyens de paiement et de transfert de ces dernières vers un centre serveur d'un organisme bancaire, du type précité, dans lequel les moyens de composition de numéros téléphoniques et le modem associé sont constitués par des éléments de circuits de téléphonie sans fil, caractérisé en ce que le dispositif comporte en outre des deuxièmes moyens de composition de numéros téléphoniques et un deuxième modem associé à ces derniers, constitués par des éléments de circuits de téléphonie câblée, et un organe de commutation assurant la mise en communication sélective de l'unité centrale avec les premiers ou deuxièmes moyens de composition de numéros téléphoniques.

Par élément de circuit de téléphonie sans fil, on entend, dans le cadre de la présente description, des circuits d'un appareil téléphonique mobile ou cellulaire, c'est-à-dire, d'un poste téléphonique en communication par ondes hertziennes avec un relais ou station de base couvrant une zone géographique du réseau téléphonique public.

Le dispositif d'acquisition et de transfert d'informations relative à des moyens de paiement peut en outre comporter une ou plusieurs des caractéristiques suivantes, prises isolément ou selon toutes les combinaisons techniquement possibles:
- l'organe de commutation est constitué par un organe de commutation actionnable manuellement par un utilisateur ;
- l'organe de commutation comporte des moyens de détection de tension prévus dans un circuit d'interface avec un réseau téléphonique commuté;
- lesdits premiers moyens de composition de numéros téléphoniques et le modem associé sont disposés dans un boîtier séparé du reste du dispositif, le boîtier comportant, raccordé en entrée de ces derniers, un circuit d'émulation d'un réseau téléphonique commuté associé à des moyens de détection des numéros téléphoniques composés par lesdits deuxièmes moyens de composition et des moyens d'adaptation des vitesses de transmission des données transmises entre les premiers et deuxièmes moyens de composition de numéros téléphoniques ;
- les moyens d'adaptation sont constitués par des moyens de mémorisation temporaire des données ;
- le circuit d'émulation est raccordé aux deuxièmes moyens de composition de numéros téléphoniques par une liaison sans fil, notamment une liaison par infrarouges de type IrDA;
- les premiers moyens de composition de numéros téléphoniques sont raccordés à un poste téléphonique sans fil ;
- les premiers moyens de composition de numéros téléphoniques sont raccordés au poste téléphonique par une liaison sans fil, notamment une liaison par infrarouges de type IrDA ;
- il constitue un terminal de paiement électronique ;
- il constitue un dispositif de lecture et de vérification de chèques.

D'autres caractéristiques et avantages ressortiront de la description suivante, données uniquement à titre d'exemple, et faite en référence aux dessins annexés sur lesquels :
- la figure 1 est une vue schématique en perspective d'un exemple de réalisation d'un dispositif d'acquisition et de transfert d'informations selon l'invention;
- la figure 2 est un schéma synoptique du dispositif de la figure 1 ; et
- la figure 3 est un schéma synoptique montrant la constitution d'un autre mode de réalisation d'un dispositif d'acquisition et de transfert d'informations relatives à des moyens de paiement.

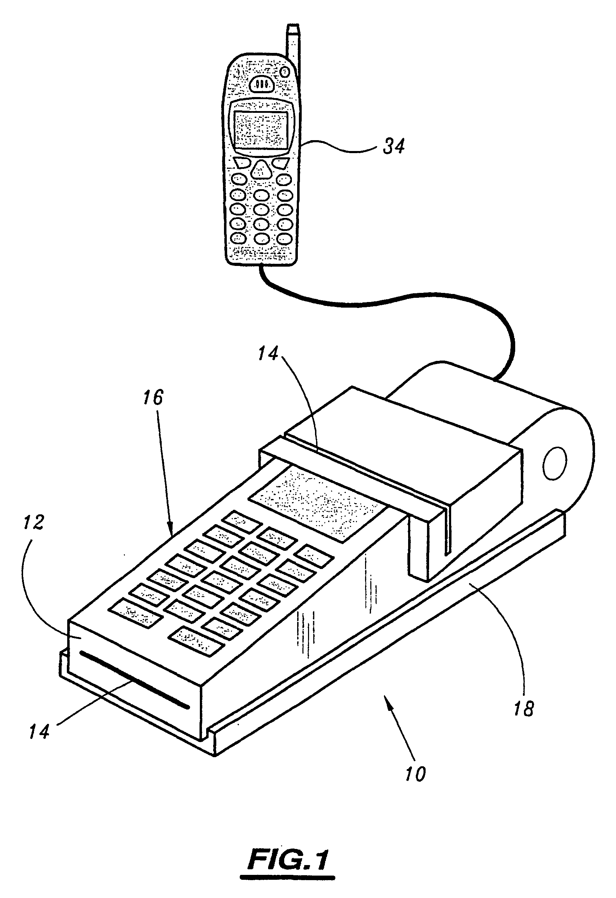

Sur la figure 1, on a représenté un dispositif d'acquisition et de transfert d'informations relatives à des moyens de paiement.

Dans l'exemple de réalisation représenté sur cette figure, le dispositif, désigné par la référence numérique générale 10, est constitué par un terminal de paiement électronique assurant, comme cela est classique, une lecture des informations contenues dans une carte bancaire de paiement (non représentée) telles que les références bancaires et le nom du porteur de la carte et leur transfert en direction du centre serveur d'un organisme bancaire, accompagnées des informations correspondant à une transaction à effectuer.

Le dispositif 10 comporte, comme cela est classique, un terminal proprement dit 12 équipé de lecteurs 14 de carte bancaire à puce et à bande magnétique et d'un clavier 16 permettant d'entrer manuellement les données correspondant aux transactions à effectuer, et un socle 18 sur lequel repose, en position d'attente, le terminal 12.

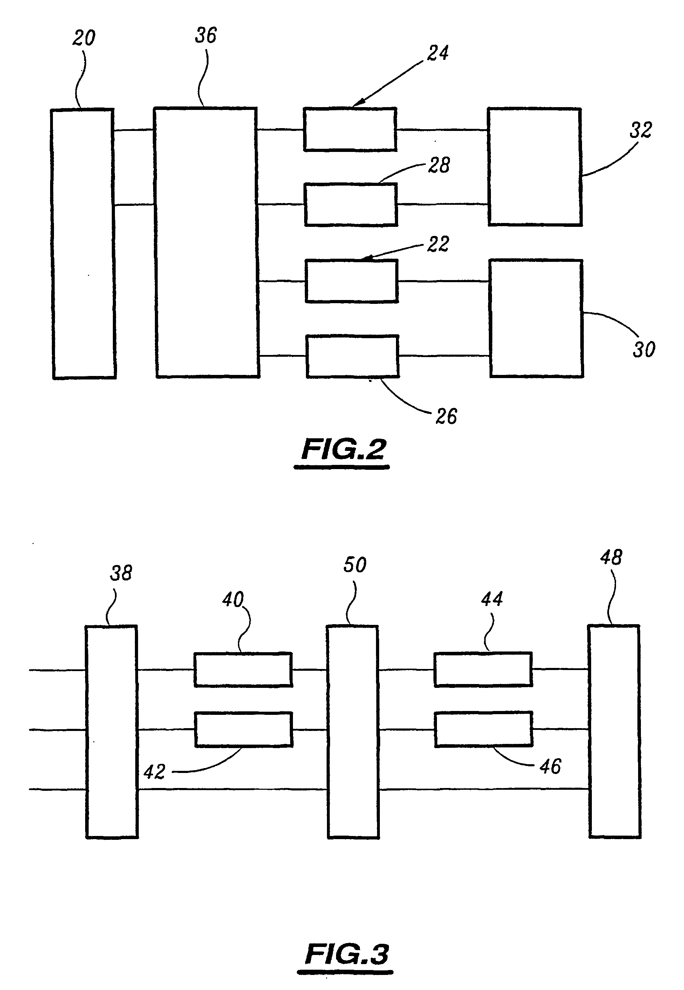

Comme cela est visible sur la figure 2, le socle 18 comporte une unité centrale de traitement de données 20 à laquelle sont raccordés des premiers moyens de composition de numéros téléphoniques 22 et des deuxièmes moyens de composition de numéros téléphoniques 24.

Les premiers et deuxièmes moyens de composition de numéros téléphoniques 22 et 24 sont chacun associés à un modem, respectivement 26 et 28, assurant, d'une part, à l'émission, la modulation des données issues de l'unité de traitement 20 en vue de leur transmission sur des réseaux de téléphonie et, d'autre part, à la réception, la démodulation des données reçues en provenance de l'organisme bancaire en vue de leur transmission vers l'unité de traitement 20.

Les premiers, 22, et deuxièmes 24, moyens de composition de numéros téléphoniques sont des moyens de type classique, appropriés pour l'utilisation envisagée. Ils ne seront donc pas décrits en détails.

On notera toutefois que les premiers moyens 22 de composition de numéros téléphoniques et le modem 26 sont réalisés à partir d'éléments de circuits de téléphonie sans fil, c'est-à-dire, capables d'assurer la numérotation et la transmission de données numériques sur un réseau de téléphonie "mobile" ou "sans fil" et ce, en fonction de la norme utilisée pour la transmission des données.

On notera également que les deuxièmes moyens 24 de composition de numéros téléphoniques sont constitués par des éléments de circuits téléphoniques de type DTMF permettant la numérotation sur le réseau téléphonique commuté public.

Deux circuits d'interface, 30 et 32, raccordés respectivement aux premiers et deuxièmes moyens de composition de numéros téléphoniques et au modem associé assurent le raccordement du dispositif d'une part, au réseau téléphonique de téléphonie sans fil et, d'autre part, au réseau téléphonique commuté.

En effet, le premier circuit d'interface 30 est destiné à permettre le branchement d'un poste téléphonique cellulaire 34 (figure 1), alors que le deuxième circuit d'interface 32 vient directement se raccorder à une ligne téléphonique.

Le circuit du socle est complété par un circuit de commutation 36 assurant sélectivement la mise en communication de l'unité de traitement de données 20 avec les premiers ou deuxièmes moyens de composition de numéros téléphoniques en vue de l'échange d'informations avec un centre serveur, après établissement d'une communication téléphonique, soit par le réseau téléphonique commuté, soit par le réseau de téléphonie "mobile".

Selon un premier mode de réalisation, le circuit de commutation 36 est constitué par un sélecteur actionnable manuellement par un utilisateur, par exemple au moyen d'un bouton-poussoir, en fonction du mode de transmission choisi.

En variante, le circuit de commutation 36 assure une détection de la tension présente au niveau du deuxième circuit d'interface 32, c'est-à-dire au niveau de la zone de raccordement de ce dernier au réseau téléphonique commuté, en utilisant un détecteur de tension approprié, et assure la mise en communication de l'unité de traitement 20 avec le réseau téléphonique commuté en cas de détection d'une tension égale à 48 V pour la France par exemple, correspondant à la tension présente classiquement sur une ligne téléphonique, et déconnecte simultanément l'unité 20 du premier circuit d'interface 30.

Dans l'exemple de réalisation qui vient d'être décrit en référence à la figure 2, 1'ensemble des éléments permettant l'établissement d'une liaison téléphonique sans fil, par l'intermédiaire d'un poste téléphonique cellulaire, avec le centre serveur d'un organisme bancaire sont intégrés au socle, sur lequel vient se connecter le poste téléphonique cellulaire.

Il serait possible, en variante, d'intégrer le poste téléphonique au socle, en dotant le socle de tous les circuits téléphoniques nécessaires pour l'établissement d'une liaison téléphonique.

Selon un autre exemple de réalisation, représenté sur la figure 3, les premiers moyens de composition de numéros téléphoniques et le modem associé sont incorporés à un boîtier séparé venant se brancher sur la prise téléphonique du socle d'un terminal de paiement électronique classique, les deuxième moyens de composition de numéros téléphoniques et le modem étant disposés dans le socle.

Sur cette figure, des éléments identiques à ceux de la figure 2 portent les mêmes numéros de référence.

Comme on le voit sur cette figure, selon cet exemple de réalisation, le dispositif comporte, en entrée, un circuit 38 d'émulation du réseau fixe, de type classique, assurant une réception des données délivrées par le socle 18 du terminal de paiement électronique 10, et raccordé à un circuit de détection des numéros téléphoniques composés par les moyens de composition de numéros téléphoniques intégrés au socle, désigné par la référence numérique générale 40 et associés à un modem 42, également de type classique.

Le circuit de détection 40 et le modem 42 sont raccordés à des moyens 44 de composition de numéros téléphoniques et à un modem 46 correspondant, identiques aux premiers moyens de composition de numéros téléphoniques 22 et au modem 26 de la figure 2, eux mêmes raccordés à un circuit d'interface 48 sur lequel vient se raccorder un poste téléphonique cellulaire (non représenté).

Un circuit 50 d'adaptation des vitesses de transmission des données transmises entre les premiers et deuxièmes moyens de composition de numéros téléphoniques, disposés respectivement dans le boîtier séparé et dans le socle, est disposé, entre, d'une part, le circuit de détection 40 et le modem 42 associé et, d'autre part, le circuit de composition de numéros téléphoniques 44 et le modem associé 46.

Ce circuit 50 incorpore des moyens de mémorisation temporaire des données transmises entre le socle et le réseau téléphonique mobile de manière à adapter la vitesse de transmission des données véhiculées sur le réseau téléphonique commuté fixe à celles du réseau téléphonique mobile.

On conçoit que cet exemple de réalisation permet de transmettre des données en direction d'un organisme bancaire en utilisant un téléphone cellulaire, tout en utilisant un terminal de paiement de type classique.

Dans les exemples de réalisation,décrits précédemment, on a considéré que le poste téléphonique cellulaire est raccordé, au moyen d'un liaison filaire, à l'interface correspondante.

Il serait toutefois possible, en variante, d'assurer une communication entre le téléphone cellulaire et le dispositif en utilisant une liaison sans fil, par exemple une liaison par infrarouges de type IrDA.

De même, il serait également possible, dans l'exemple de réalisation décrit en référence à la figure 3, d'envisager l'utilisation d'une telle liaison sans fil entre le terminal de paiement électronique et le boîtier.

L'invention n'est pas limitée aux modes de réalisation décrits, dans lesquels le dispositif est constitué par un terminal de paiement électronique.

En effet, le dispositif peut également être agencé sous la forme d'un dispositif de lecture et de vérification de chèques pour la lecture des références portées sur un chèque et la transmission de ces dernières en direction d'un organisme bancaire en vue de vérifier, par exemple, que le chèque ne fait l'objet d'une opposition.

## Revendications

1. Dispositif d'acquisition d'informations relatives à des moyens de paiement et de transfert de ces dernières vers un centre serveur d'un organisme bancaire, le dispositif comprenant des moyens (14) de lecture des moyens de paiement raccordés à une unité centrale de traitement (20) et des moyens (22) de composition de numéros téléphoniques associés à un modem (26) pour l'établissement d'une liaison téléphonique avec le centre serveur, dans lequel les moyens (22 ; 44) de composition de numéros téléphoniques et le modem (26 ; 46) associé sont constitués par des éléments de circuits de téléphonie sans fil, **caractérisé en ce que** le dispositif comporte en outre des deuxièmes moyens (24) de composition de numéros téléphoniques et un deuxième modem (28) associé à ces derniers, constitués par des éléments de circuits de téléphonie câblée, et un organe de commutation (36) assurant la mise en communication sélective de l'unité centrale (20) avec les premiers (22) ou deuxièmes (24) moyens de composition de numéros téléphoniques.

2. Dispositif selon la revendication 1, **caractérisé en ce que** l'organe de commutation (36) est constitué par un organe de commutation actionnable manuellement par un utilisateur.

3. Dispositif selon la revendication 1, **caractérisé en ce que** l'organe de commutation (36) comporte des moyens de détection de tension prévus dans un circuit d'interface avec un réseau téléphonique commuté.

4. Dispositif selon l'une quelconque des revendications 1 à 3, **caractérisé en ce que** lesdits premiers moyens (44) de composition de numéros téléphoniques et le modem (46) associé sont disposés dans un boîtier séparé du reste du dispositif et **en ce que** le boîtier comporte, raccordé en entrée de ces derniers, un circuit (38) d'émulation d'un réseau téléphonique commuté associé à des moyens (40) de détection des numéros téléphoniques composés par lesdits deuxièmes moyens (24) de composition et des moyens (50) d'adaptation des vitesses de transmission des données transmises entre les premiers et deuxièmes moyens de composition de numéros téléphoniques.

5. Dispositif selon la revendication 3, **caractérisé en ce que** les moyens (50) d'adaptation sont constitués par des moyens de mémorisation temporaire des données.

6. Dispositif selon l'une des revendications 4 et 5, **caractérisé en ce que** le circuit d'émulation (3B) est raccordé aux deuxièmes moyens de composition de numéros téléphoniques par une liaison sans fil, notamment une liaison par infrarouges de type IrDA.

7. Dispositif selon l'une quelconque des revendications 1 à 6, **caractérisé en ce que** les premiers moyens de composition de numéros téléphoniques sont raccordés à un poste téléphonique sans fil (34).

8. Dispositif selon la revendication 7, **caractérisé en ce que** les premiers moyens de composition de numéros téléphoniques sont raccordés au poste téléphonique (34) par une liaison sans fil, notamment une liaison par infrarouges de type IrDA.

9. Dispositif selon l'une quelconque des revendications 1 à 8, **caractérisé en ce qu'**il constitue un terminal de paiement électronique.

10. Dispositif selon l'une quelconque des revendications 1 à 8, **caractérisé en ce qu'**il constitue un dispositif de lecture et de vérification de chèques.

## Claims

1. A device for acquiring information relating to payment means and transferring same to a server centre of a banking Institution, the device comprising means (14) for reading the payment means connected to a central processing unit (20) and means (22) for dialling telephone numbers associated with a modem (26) for establishing a telephone communication with the server centre, in which the means (22; 44) for dialling telephone numbers and the associated modem (26; 46) are formed by wireless telephone circuit elements, **characterised in that** the device further comprises second means (24) for dialling telephone numbers and a second modem (28) associated therewith, which are formed by wired telephone circuit elements, and a switching member (36) providing for selective communication of the central unit (20) with the first (22) or second (24) means for dialling telephone numbers.

2. A device according to claim 1 **characterised in that** the switching member (36) is formed by a switching member actuable manually by a user.

3. A device according to claim 1 **characterised in that** the switching member (36) comprises voltage detecting means provided in an interface circuit with a switched telephone system.

4. A device according to any one of claims 1 to 3 **characterised in that** said first means (44) for dialling telephone numbers and the associated modem (46) are disposed in a housing separate from the rest of the device and that the housing comprises, connected at the input to the latter, a circuit (38) for emulating a switched telephone system associated with means (40) for detecting telephone numbers dialled by said second dialling means (24) and means (50) for adapting the rates of transmission of the data transmitted between the first and second means for dialling telephone numbers.

5. A device according to claim 3 **characterised in that** the adaptation means (50) are formed by means for temporary storage of the data.

6. A device according to one of claims 4 and 5 **characterised in that** the emulation circuit (38) is connected to the second means for dialling telephone numbers by a wireless connection, in particular an infra-red connection of IrDA type.

7. A device according to any one of claims 1 to 6 **characterised In that** the first means for dialling telephone numbers are connected to a wireless telephone unit (34).

8. A device according to claim 7 **characterised in that** the first means for dialling telephone numbers are connected to the telephone unit (34) by a wireless connection, in particular an infra-red connection of IrDA type.

9. A device according to any one of claims 1 to 8 **characterised in that** it constitutes an electronic payment terminal.

10. A device according to any one of claims 1 to 8 **characterised in that** it constitutes a device for reading and verifying cheques.

## Patentansprüche

1. Vorrichtung zur Erfassung von Zahlungsmittel betreffenden Daten und zu ihrer Übertragung zu einem Servicezentrum eines Bankinstituts, wobei die Vorrichtung mit einer zentralen Verarbeitungseinheit (20) verbundene Mittel (14) zum Lesen der Zahlungsmittel und Mittel (22) zum Wählen von Fernsprechnummern aufweist, denen ein Modem (26) zur Herstellung einer Fernsprechverbindung mit dem Servicezentrum zugeordnet ist, wobei die Mittel (22;44) für die Fernsprechnummernwahl und der zugeordnete Modem (26;46) aus Sprechfunkschaltungselementen gebildet sind, **dadurch gekennzeichnet, dass** die Vorrichtung ferner zweite Mittel (24) zur Fernsprechnummernwahl und einen zweiten, diesen zugeordneten Modem (28) aufweist, wobei diese aus Schaltungselementen der drahtgebundenen Fernsprechtechnik bestehen, sowie ein Umschaltorgan (36), das die selektive Verbindung der zentralen Einheit (20) mit den ersten (22) oder den zweiten (24) Mitteln zur Fernsprechnummernwahl gewährleistet.

2. Vorrichtung nach Anspruch 1, **dadurch gekennzeichnet, dass** das Umschaltorgan (36) aus einem durch einen Benutzer manuell betätigbaren Umschaltorgan besteht.

3. Vorrichtung nach Anspruch 1, **dadurch gekennzeichnet, dass** das Umschaltorgan (36) Spannungserfassungsmittel aufweist, die in einer Schnittstellenschaltung mit einem öffentlichen Wählnetz vorgesehen sind.

4. Vorrichtung nach einem der Ansprüche 1 bis 3, **dadurch gekennzeichnet, dass** die ersten Mittel (44) zur Fernsprechnummernwahl und der zugeordnete Modem (46) in einem von der restlichen Vorrichtung getrennten Gehäuse angeordnet sind und dass das Gehäuse eine mit dem Eingang von diesen verbundene Schaltung (38) zur Emulation eines öffentlichen Wahlnetzes aufweist, der Mittel (40) zur Erfassung der von den zweiten Nummernwahlmitteln (24) gewählten Fernsprechnummern und Mittel (50) zur Anpassung der Übertragungsgeschwindigkeiten der zwischen den ersten und zweiten Mitteln zur Fernsprechnummernwahl übertragenen Daten zugeordnet sind.

5. Vorrichtung nach Anspruch 3, **dadurch gekennzeichnet, dass** die Anpassungsmittel (50) aus Mitteln zur vorübergehenden Speicherung der Daten bestehen.

6. Vorrichtung nach einem der Ansprüche 4 und 5, **dadurch gekennzeichnet, dass** die Emulationsschaltung (38) mit den zweiten Mitteln zur Fernsprechnummernwahl durch eine drahtlose Verbindung, insbesondere eine Infrarotverbindung vom Typ IrDA, verbunden ist.

7. Vorrichtung nach einem der Ansprüche 1 bis 6, **dadurch gekennzeichnet, dass** die ersten Mittel zur Fernsprechnummernwahl mit einem drahtlosen Fernsprechgerät (34) verbunden sind.

8. Vorrichtung nach Anspruch 7, **dadurch gekennzeichnet, dass** die ersten Mittel zur Fernsprechnummernwahl mit dem Fernsprechgerät (34) über eine drahtlose Verbindung, insbesondere eine Infrarotverbindung vom Typ IrDA, verbunden sind.

9. Vorrichtung nach einem der Ansprüche 1 bis 8, **dadurch gekennzeichnet, dass** sie einen Terminal für den elektronischen Zahlungsverkehr bildet.

10. Vorrichtung nach einem der Ansprüche 1 bis 8, **dadurch gekennzeichnet, dass** sie eine Vorrichtung zum Lesen und Prüfen von Schecks bildet.
